# FASCICULE DE BREVET EUROPEEN

(11) **EP 3 245 709 B1**
(45) Date de publication et mention de la délivrance du brevet: **01.09.2021**
(21) Numéro de dépôt: 16703570.8
(22) Date de dépôt: 14.01.2016
(51) Int. Cl.: B60L 53/30, B60L 58/16, B60L 53/53, B60L 53/10, H02J 7/34

(54) **SYSTÈME DE CHARGEMENT D'ÉLÉMENTS DE STOCKAGE D'ÉNERGIE ÉLECTRIQUE D'UN VÉHICULE**
SYSTEM ZUR LADUNG VON STROMSPEICHERELEMENTEN EINES KRAFTFAHRZEUGES
SYSTEM FOR CHARGING ELECTRICAL ENERGY STORAGE ELEMENTS OF A VEHICLE

(30) Priorité: 16.01.2015 FR 1550384
(43) Date de publication de la demande: 22.11.2017
(73) Titulaire: ADETEL TRANSPORTATION SOLUTION, 69130 Ecully (FR)
(72) Inventeur: CROSET, Alain, 31200 Toulouse (FR)
(74) Mandataire: Verriest, Philippe
(86) Numéro de dépôt international: PCT/FR2016/050064
(87) Numéro de publication internationale: WO 2016/113505

(56) Documents cités:
- EP-A1- 2 469 682
- EP-A1- 2 523 301
- US-A1- 2011 248 683
- US-A1- 2013 020 993
- US-A1- 2014 347 017

## Description

### Domaine de l'invention

Le domaine de la présente invention porte sur celui des véhicules dits « écologiques » et plus notamment celui des véhicules électriques. Elle concerne particulièrement, mais pas exclusivement, le domaine des moyens de transport électriques à alimentation autonome ainsi que leurs système d'alimentation. Plus précisément, la présente invention se rapporte au dispositif de chargement d'un moyen de stockage d'énergie utilisé en parallèle avec une source d'énergie électrique en utilisant des dispositifs de stockage d'énergie comme dispositifs tampons.

### Art antérieur

De nos jours, la plupart des véhicules électriques récents utilisés dans les espaces de transport sont équipés, dans le cas des espaces de transport terrestre, d'un système d'alimentation classique, c'est-à-dire par fil ou plus précisément par caténaire dans le cas de tramway et/ou de bus, et par rail, plus exactement par un troisième rail dans le cas de métro. Ce système d'alimentation comprend, dans la plupart des cas, un ensemble de transporteur d'énergie électrique, tel des câbles et/ou des rails en bronze, en aluminium, acier et/ou un alliage de ces composants afin de permettre l'alimentation des véhicules électriques par captage du courant transporté par l'ensemble de transporteur d'énergie électrique. Ainsi il permet aux passagers de se déplacer entre deux points distincts et distants à l'intérieur d'un espace de transport à l'aide de moyens de transport. Bien entendu, l'espace de transport est configuré pour permettre le déplacement du véhicule électrique entre au moins deux points de l'espace de transport.

Afin de pouvoir permettre une couverture homogène et étendue de l'espace de transport, ce système d'alimentation nécessite toutefois que des câbles électrifiés soient installés le long de l'espace de transport. Cette installation engendre des coûts importants. Par ailleurs, lorsque l'espace de transport correspond à une ville avec un patrimoine architectural, il est important de veiller à la préservation de ce patrimoine tout en intégrant des moyens de transport écologiques et performants.

Il existe quelques solutions de dispositifs de rechargement. Cependant, leurs temps de rechargement s'étalent entre une trentaine de secondes et quelques minutes. Ces dispositifs de rechargement existants proposent des systèmes, dont la connexion avec un véhicule électrique, est réalisée par un dispositif électromécanique. Ce dispositif électromécanique augmente considérablement le temps de connexion entre le dispositif et le véhicule électrique, et ne favorise pas un temps court de rechargement. De plus, la connexion série des deux éléments sources, c'est-à-dire entre le dispositif de stockage d'énergie et l'organe de stockage d'énergie, ne permet pas une régulation précise de la tension de charge du stockage d'énergie du véhicule électrique. Il existe donc un besoin pour une nouvelle technique permettant de couvrir un espace de transport le plus vaste possible tout en préservant le patrimoine architectural compris dans l'espace de transport.

Les documents EP 2 523 301 et US 2014/347017 concernent des stations de chargement pour véhicules, mais ne divulguent pas au moins un transformateur, un régulateur de tension connecté en série avec le dispositif de stockage d'énergie de sorte à former un circuit fermé en étant configuré pour transférer l'énergie électrique stockée par le dispositif de stockage d'énergie et que le convertisseur de tension est configuré pour être connecté en parallèle au régulateur de tension et au dispositif de stockage d'énergie, du dispositif de chargement, entre le noeud de sortie et le noeud commun.

### Exposé de l'invention

La présente invention a pour but de résoudre tout ou partie des inconvénients mentionnés ci-dessus sous la forme d'un système de chargement selon la revendication 1, d'une station de chargement pour un véhicule électrique selon la revendication 7 et d'une installation selon la revendication 8. D'autres modes de réalisation sont décrits dans les revendications dépendantes.

D'autres caractéristiques et avantages de l'invention apparaîtront mieux à la lecture de la description qui suit d'un mode réalisation de l'invention donné à titre d'exemple non limitatif.

### Liste des figures

L'invention sera mieux comprise à l'aide la description détaillée qui est exposée ci-dessous en regard du dessin, dans lesquels :
- la figure 1 représente un exemple chargement de véhicule électrique dans lequel le dispositif de chargement selon l'invention est mis en œuvre ;
- la figure 2 montre un schéma électrique simplifié du véhicule électrique 900 lorsqu'il est connecté à la station de chargement 400
- La figure 3 illustre un procédé de chargement.

Dans la description détaillée qui va suivre des figures définies ci-dessus, les mêmes éléments ou les éléments remplissant des fonctions identiques pourront conserver les mêmes références de manière à simplifier la compréhension de l'invention.

Dans la suite de cette description, les caractéristiques et les fonctions bien connues de l'homme du métier ne seront pas décrites en détails.

### Description d'un mode réalisation de l'invention

### Principe général

Le principe général de l'invention repose sur le chargement de véhicule électrique 900 à l'aide d'un dispositif de chargement 100 dans un espace de transport 710. Le véhicule électrique 900, par exemple un tramway 900, comprend au moins un organe consommateur d'énergie électrique, au moins un moteur électrique 930 par exemple, et un organe de stockage d'énergie 910. L'organe de stockage d'énergie 910, un super-condensateur par exemple, est configuré pour être chargé en énergie électrique et à transférer cette énergie électrique à l'organe consommateur d'énergie électrique, c'est à dire au moteur électrique 930. L'organe consommateur d'énergie électrique est configuré pour transformer cette énergie électrique en une énergie mécanique, plus exactement en une énergie de translation, et ainsi permet au véhicule électrique 900 d'effectuer un déplacement dans un espace de transport 710. Lorsque l'énergie électrique est en partie consommée, il est parfois nécessaire de charger l'organe de stockage d'énergie 910 du véhicule électrique 900 dans un lieu permettant de charger et/ou de recharger l'organe de stockage d'énergie 910 et de permettre au véhicule électrique 900 de continuer à se déplacer dans l'espace de transport 710 et de transporter des passagers entre deux stations. Dans certaines circonstances, il peut être avantageux de charger le dispositif de stockage d'énergie 110 du véhicule électrique 900 rapidement afin d'éviter une immobilisation inutile du véhicule électrique 900. Par exemple lorsque le véhicule électrique 900 s'arrête à une station d'arrêt afin de permettre aux passagers de monter et/ou de descendre.

Étant donné que l'arrêt du véhicule électrique 900 à la station d'arrêt n'excède pas une trentaine de secondes dans certains cas, plus communément une vingtaine de secondes, le chargement de l'organe de stockage d'énergie 910 ne doit pas dépasser ce laps de temps. Les solutions de rechargement actuellement mises en œuvre ne donne pas satisfaction car leurs temps de rechargement s'étalent entre une trentaine de secondes et quelques minutes. Certaines d'entre elles peuvent effectivement charger en moins de trentes secondes. Cependant, la puissance délivrée par ces solutions ne dépasse pas 100 KW. Cela est dû au circuit très complexe qui doit fournir une puissance considérable dans un laps de temps très court de l'ordre de 10 à 15 secondes et en même temps charger des éléments de stockage d'énergie entre deux chargements.

D'autres dispositifs de rechargement proposent des systèmes, dont le chargement et le déchargement des éléments de stockage d'énergie ce réalise par l'intermédiaire de contacteurs. Ces contacteurs ont une position de chargement dans laquelle l'éléments de stockage d'énergie est chargé par un chargeur et ensuite déchargé par l'intermédiaire de ce même chargeur vers une baterie d'un véhicule électrique. Cependant, lorque les contacteurs changent de position, il est important pour le chargeur d'observer un temps d'« inertie ». Effectivement, dans ce type de chargeur le courant alternatif du réseau électrique est transformé en courant continu. La plupart du temps, il s'agit d'abaisser la tension et ensuite de convertir le courant alternatif en courant continu.Cette étape de conversion met en jeu des condensateurs comprenant de fortes capacités de l'ordre de quelques dizaine de miliFarads et qui emmagasinent cette énergie avant de la restituer. À cela s'ajoute un élément inductif, typiquement une bobine de quelque miliHenry, qui va également enmagasiner de l'énergie mais la restituera avec un retard.

Dès lors, lorsque le chargeur a terminé de charger les éléments de stockage d'énergie, une partie de l'énergie électrique, qui a servi à charger les éléments de stockage d'énergie, reste piégée dans le chargeur et lorsque un véhicule électrique se présente devant le chargeur, l'énergie électrique piégée est libérée violemment et incontrolée vers le véhicule électrique, à la manière d'une décharge électrostatique. Une solution serait de décharger l'énergie électrique piégée dans des résistances, ce qui ne serait pas très économique, ou d'attendre que l'énergie électrique piégée se dissipe dans le circuit électrique. Cette dernière solution diminuerait considérablement le temps de charge entre deux déchargements d'une part et d'autre part elle augmentrait considérablement le temps de connexion entre le dispositif et le véhicule électrique.

La présente invention a pour objet de fournir un dispositif de chargement 100 permettant de diminuer le temps de chargement de l'organe de stockage d'énergie 910 du véhicule électrique 900. L'invention atteint son but par le fait que le dispositif de chargement 100 comprend un dispositif de stockage 110 d'énergie apte à stocker de l'énergie électrique fournie par une source d'énergie 320, un dispositif de connexion 190 pour connecter électriquement le dispositif de stockage d'énergie 110 avec l'organe de stockage d'énergie 910 du véhicule électrique 900 et de transférer l'énergie stocké dans le dispositif de stockage d'énergie 110 entre le dispositif de chargement 100 et le véhicule électrique 900. Plus particulièrement, la présente invention permet de charger un véhicule électrique 900 avec une borne de chargement 200 permettant une alimentation hybride de l'organe de stockage d'énergie 910 du véhicule électrique 900, en d'autres termes une alimentation combinant simultanément l'énergie électrique d'une source d'énergie électrique 320 et du dispositif de stockage 110 d'énergie afin que le transfert d'énergie électrique entre la borne de chargement 200 et le véhicule électrique 900 soit effectué en quelques secondes seulement.

Ainsi l'invention améliore grandement le transfert d'énergie électrique entre une borne de chargement 200 et un véhicule électrique 900, et optimise les coûts d'infrastructure d'un espace de transport 710 en diminuant les temps d'arrêt du véhicule électrique 900 en fonctionnement.

### Description générale d'un mode réalisation

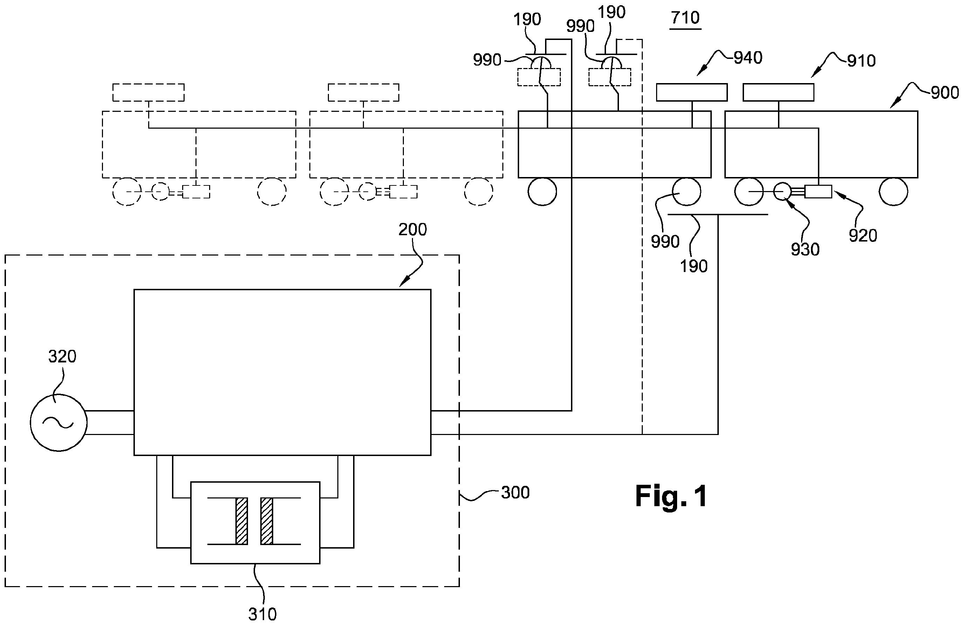

La figure 1 est une illustration schématique d'une portion d'installation selon l'invention comprenant une station de chargement 400 selon l'invention et un véhicule électrique 900 configuré pour transporter des passagers selon l'invention. Dans cet exemple, il sera considéré que le véhicule électrique 900, par exemple un tramway 900, se déplace dans un espace de transport 710 et que le tramway 900 est configuré pour transporter des passagers dans l'espace de transport 710 dans lequel est disposé au moins une station de chargement 400 selon l'invention. Dans l'exemple de la figure 1, l'espace de transport 710 comprend un espace urbain, interurbain et/ou rural, et un réseau de transport de voies ferrées permettant au tramway 900 de se déplacer entre deux stations de chargement 400.

Pour des raisons de clarté, l'espace de transport 710 a été simplifié et représente une portion du réseau de transport de voies ferrées. Toujours pour simplifier, une seule station de chargement 400 a été représentée ainsi qu'un seul tramway 900.

En l'espèce, la portion du réseau de transport de voies ferrées est réalisée à l'air libre. Bien entendu, cette portion de voies ferrées est généralement incrustée dans la chaussée et permet ainsi à la chaussée d'être utilisable aussi bien par d'autres types de véhicules électriques 900 tels que des bus électrique et/ou des véhicules équipés de moteurs thermiques ou autres véhicules autorisés à se déplacer sur une chaussée, comme par exemple une bicyclette. Par ailleurs, puisque dans certains cas il peut s'agir d'un véhicule électrique de type métro, naturellement le réseau de transport de voies ferrées serait, dans ce cas, souterrain.

Le tramway 900 se déplace sur la voie ferrée le long d'une ligne prédéterminée dans l'espace de transport 710 afin de former une ligne de transport dans le réseau de transport de voies ferrées. Une ligne de transport désigne, en général, un trajet réalisé dans le réseau de transport de voies ferrées afin de permettre au véhicule électrique 900 de se déplacer entre un lieu de provenance et un lieu de destination, autrement dit entre deux lieux. Typiquement, une ligne de transport peut comprendre un trajet de plusieurs kilomètres, voire d'une dizaine de kilomètres et dans certains cas une vingtaine de kilomètres et une pluralité de stations de chargement qui jalonne la ligne de transport. Chaque station de chargement 400 peut être séparée de la prochaine station de chargement 400 qui la précède immédiatement où qui la suit immédiatement le long de cette ligne de transport par une distance D.

Cette distance D correspond à la distance minimale que doit parcourir le tramway 900 pour passer d'une station de chargement 400 qu'il vient de quitter à la station de chargement 400 suivante. Selon certaines lignes de transport, la distance séparant au moins deux stations de chargement 400 peut être comprise entre 100 m et 1000 m, en particulier entre 150 m et 850 m et notamment entre 200 m et 800 m. Le choix de la longueur de la distance D, séparant au moins deux stations de chargement, est important car dans le cas où la distance est courte, voire trop courte, cela revient à augmenter très sensiblement les coûts d'infrastructures et à l'inverse, une grande distance, voire une trop grande distance, conduit à doter un véhicule électrique 900 d'organe de stockage d'énergie 910 capable de stocker une importante quantité d'énergie électrique, et donc indirectement d'augmenter le poids du véhicule électrique 900 ainsi que sa consommation d'énergie électrique et voire même de diminuer le volume de transport disponible pour transporter les passagers. Il est compris de l'homme du métier que ce dernier inconvénient induit directement une perte de rentabilité.

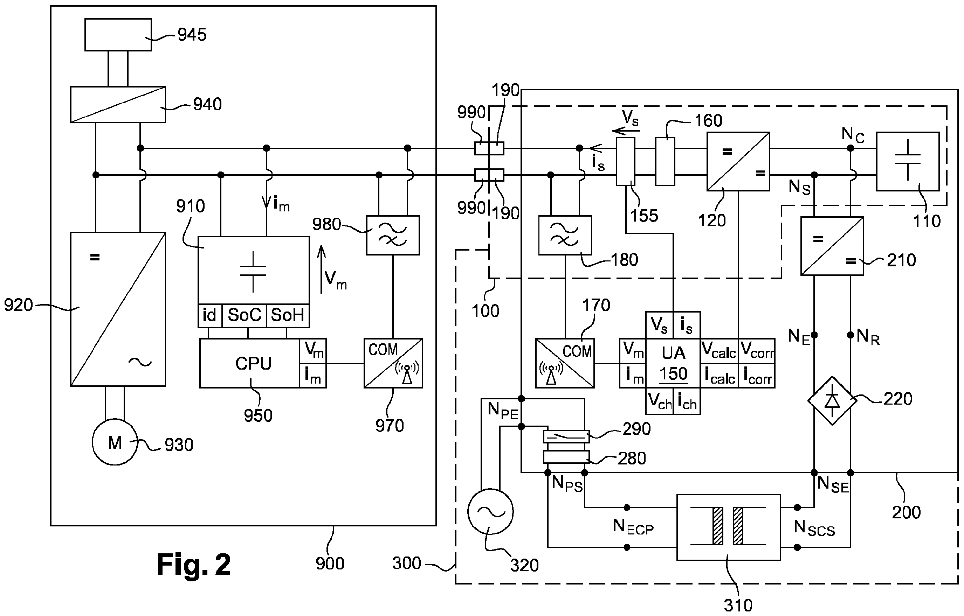

La figure 2 représente le schéma électrique simplifié du véhicule électrique 900 lorsqu'il est connecté à la station de chargement 400. La station de chargement 400 est installée le long de la ligne de transport et comprend un système de chargement 300 pour un tramway 900.

Le tramway 900 comprend un organe de stockage d'énergie 910 électrique et un organe consommateur d'énergie. L'organe consommateur d'énergie comprend :
- un convertisseur bidirectionnel 920 ; le convertisseur bidirectionnel 920 est configuré pour être connecté au organe de stockage d'énergie 910 électrique et pour fournir une énergie électrique transformé ;
- un moteur électrique 930 ; le moteur électrique 930 est configuré pour être connecté au convertisseur bidirectionnel 920 et pour transformer l'énergie électrique transformé par le convertisseur bidirectionnel 920 en une énergie de translation plus exactement en une énergie motrice ;

- un générateur basse tension 940 ; le générateur basse tension 940 est configuré pour être connecté à l'organe de stockage d'énergie 910 et pour fournir une basse tension ; et,
- un ensemble d'organes auxiliaires 945 ; l'ensemble d'organes auxiliaires 945 peut comprendre au moins un appareil électrique 945 connecté au générateur basse tension 940.

La station de chargement 400 pour le tramway 900 comprend en outre un système de chargement 300 selon l'invention, un espace de chargement, d'arrêt et/ou de stationnement comprenant un accès configuré pour recevoir un tramway 900 dans ledit espace de chargement, d'arrêt et/ou de stationnement. De façon plus spécifique, l'espace de chargement permet de charger le tramway 900 dans l'espace de chargement, lorsque le tramway 900 se trouve à l'arrêt et/ou en stationnement.

Le système de chargement 300 comprend une borne de chargement 200 selon l'invention et un dispositif de connexion 190 configuré pour transférer une quantité d'énergie suffisante et/ou nécessaire afin que le tramway 900 puisse se déplacer dans l'espace de transport 710 et/ou entre au moins deux stations de chargement 400.

À présent le dispositif de chargement 100 va être décrit plus en détails en référence à la figure 2.

Le dispositif de chargement 100, représenté sur la figure 2, comprend :
- un dispositif de stockage d'énergie 110 ; le dispositif de stockage d'énergie 110 étant destiné à être chargé en énergie électrique, à stocker de l'énergie électrique et à transférer cette énergie électrique ;
- un régulateur de tension 120 ; ledit régulateur de tension 120 étant connecté en série avec le dispositif de stockage d'énergie 110 de sorte à former un circuit fermé et étant configuré pour transférer l'énergie électrique stockée par le dispositif de stockage d'énergie 110 ; et,
- un dispositif de connexion 190 ; le dispositif de connexion 190 étant configuré pour connecter électriquement le dispositif de stockage d'énergie 110 du dispositif de chargement 100, par l'intermédiaire du régulateur de tension 120, avec l'organe de stockage d'énergie 910 du véhicule électrique 900 et pour transférer au moins en partie l'énergie électrique stockée par le dispositif de stockage d'énergie 110 du dispositif de chargement 100 vers l'organe de stockage d'énergie 910 du véhicule électrique 900.

Le dispositif de stockage 110 d'énergie peut comprendre un condensateur, un super-condensateur plus connus sous le nom de super-capacité, un condensateur à double couche, une Ultra-capacité, et/ou une capacité à double couche. Le condensateur 910 du véhicule électrique 900 peut posséder une capacité dont la valeur peut être comprise entre 5 Farads et 300 Farads, en particulier entre 7 Farads et 250 Farads et de préférence entre 10 Farads et 200 Farads.

Le dispositif de stockage 110 d'énergie peut être configuré pour fonctionner à une tension comprise entre 100 V et 1000 V, en particulier entre 150 V et 850 V et notamment entre 200 V et 700 V. En outre, le dispositif de stockage 110 d'énergie peut être configuré pour fonctionner selon trois modes fonctionnement :
- un mode chargement; le mode chargement permet de charger le dispositif de stockage 110 en énergie électrique par une source d'énergie électrique 320 ;
- un mode stockage ; le mode stockage permet de stocker de l'énergie électrique chargée par le mode chargement ; et,
- un mode transfert; le mode transfert permet de transférer l'énergie électrique stockée lors du mode stockage vers le véhicule électrique 900 par exemple.

Le dispositif de stockage 110 d'énergie peut être configuré pour fonctionner à une tension comprise entre 100 V et 1000 V, en particulier entre 150 V et 850 V et notamment entre 200 V et 700 V. Plus particulièrement, le dispositif de stockage 110 d'énergie peut être configuré pour fonctionner en mode chargement ou en mode transfert à une tension comprise entre 100 V et 1000 V, en particulier entre 150 V et 850 V et notamment entre 200 V et 700 V.

De plus, le dispositif de stockage 110 d'énergie peut également être configuré pour fonctionner à un courant compris entre 0 A et 850 A, en particulier entre 0 A et 700 A et de préférence entre 0 A et 550 A. Plus particulièrement, le dispositif de stockage 110 d'énergie peut être configuré pour fonctionner en mode chargement ou en mode transfert à un courant compris entre 0 A et 850 A, en particulier entre 0 A et 700 A et de préférence entre 0 A et 550 A. Bien entendu, ces valeurs de courant et de tension pourront évoluer avec les nouvelles générations de technologie.

Les valeurs précédemment citées, c'est à dire les valeurs en tension et/ou les valeurs en courant, sont fournies par le dispositif de stockage 110 d'énergie au régulateur de tension 120. D'ailleurs ces valeurs peuvent être considérées comme suffisantes et/ou nécessaires pour permettre au dispositif de stockage 110 d'énergie de charger l'organe de stockage d'énergie 910 du tramway 900 par l'intermédiaire du dispositif de connexion 190 afin que le tramway 900 puisse se déplacer dans l'espace de transport 710.

Ce transfert d'énergie se produit par l'intermédiaire du régulateur de tension 120 au travers du dispositif de connexion 190. Le régulateur de tension 120 est configuré pour réguler la tension de sortie et/ou le courant de sortie, respectivement, dans une plage de tension d'alimentation et/ou une plage de courant d'alimentation afin d'alimenter l'organe de stockage d'énergie 910 du véhicule électrique 900 et plus précisément afin de permettre le transfert d'énergie électrique entre le dispositif de stockage 110 d'énergie du dispositif de chargement 100 et l'organe de stockage d'énergie 910 du véhicule électrique 900 via le dispositif de connexion 190. La plage d'alimentation des moyens de stockage est comprise entre 240 V et 1200 V, en particulier entre 400 V et 1100 V et de préférence entre 450 V et 1000 V.

Le régulateur de tension 120 comprend un hacheur (non représenté), plus exactement le régulateur de tension 120 comprend un hacheur parallèle (non représenté) en série avec un hacheur série (non représenté) et un dispositif unidirectionnel (non représenté) afin d'éviter un retour de courant. Ce dernier est intégré dans le hacheur ou les hacheurs. Par ailleurs, afin d'éviter une surtension du hacheur parallèle au hacheur série, une protection peut être disposée entre les deux. Dans cette description, le mode fonctionnement d'un hacheur ne sera pas décrit en détails puisque le mode fonctionnement d'un hacheur, que ce soit un hacheur série ou un hacheur parallèle, est bien connu de l'homme du métier.

Comme il peut être observé sur la figure 2, le hacheur parallèle - en anglais « boost converter » - est connecté en aval du dispositif de stockage 110, de sorte à former un circuit fermé et en amont du hacheur série - en anglais « buck converter » - dans le sens de circulation du courant lorsque le dispositif de chargement 100 est en mode transfert, c'est-à-dire lorsque l'énergie électrique est transférée du dispositif de stockage d'énergie 110 vers l'organe de stockage d'énergie 910.

Dans cette configuration, le dispositif de stockage 110 d'énergie est configuré pour fournir une tension d'entrée au hacheur parallèle comprise entre 100 V et 1000 V et/ou pour fournir un courant d'entrée au hacheur parallèle compris 0 A et 850 A. Le hacheur parallèle est, quant à lui, configuré pour fournir à partir de la tension d'entrée fournie par le dispositif de stockage 110 d'énergie une tension de sortie supérieure à celle-ci. Effectivement, le hacheur parallèle fonctionne comme un élévateur de tension et permet ainsi de fournir une différence positive entre la tension de sortie et la tension d'entrée. En revanche, le hacheur série fonctionne comme un abaisseur de tension et permet ainsi de fournir une différence négative entre la tension de sortie et la tension d'entrée.

Ainsi avantageusement, le régulateur de tension 120 peut réguler la tension de sortie dans une large plage de tension, c'est à dire entre 240 V et 1200 V.

Cette régulation de tension peut être constante et/ou dynamique. En effet, le régulateur de tension 120 est configuré pour fonctionner selon deux modes de fonctionnement : un mode constant et/ou un mode dynamique.

Dans le cas d'une régulation constante, c'est à dire dans le cas où le régulateur de tension 120 est configuré pour fonctionner selon le mode constant, la tension et/ou le courant en sortie sont régulés de sorte que la valeur (de tension et/ou de courant en sortie) soit comprise entre ±1% par rapport à une valeur nominale (de tension et/ou de courant en sortie). Ce réglage peut être effectué par défaut, c'est-à-dire que le réglage peut être effectué lors de la fabrication du régulateur de tension 120, et/ou peut être effectué par l'utilisateur en réglant la valeur de tension et/ou de courant en sortie par l'intermédiaire d'une unité d'asservissement 150.

Effectivement, l'unité d'asservissement 150 est configurée pour être connectée au régulateur de tension 120 et/ou pour asservir le régulateur de tension 120. Ainsi, il peut être permis au régulateur de tension 120 de réguler une tension et/ou un courant au cours du temps de façon constante et/ou de façon dynamique. En effet, il peut être nécessaire de réguler la tension de sortie en fonction de la tension en entrée fournie par le dispositif de stockage 110 d'énergie, la tension en sortie du dispositif de stockage d'énergie 110 peut varier au cours du temps lorsque le dispositif de stockage d'énergie 110 transfert l'énergie électrique stockée vers le régulateur de tension 120. Avantageusement, cela permet au régulateur de tension 120 de fournir une tension et/ou un courant de sortie indépendamment de sa tension et/ou de son courant d'entrée. De surcroit, l'unité d'asservissement 150 permet favorablement de réguler la tension de sortie du régulateur de tension 120 grâce à un dispositif de retour 155 permettant à l'unité d'asservissement 150 d'être informer sur la tension en sortie et par la même occasion le maintien de cette valeur et/ou selon un modèle établit. L'établissement de ce modèle M sera décrit plus en détails un peu plus loin dans cette description.

De surcroit, étant donné que de fortes tensions et/ou de forts courants sont mis en jeu lors du transfert d'énergie entre le dispositif de stockage 110 d'énergie du dispositif de chargement 100 et l'organe de stockage d'énergie 910 du véhicule électrique 900, le dispositif de chargement 100 comprend en outre une sécurité 160 au niveau du dispositif de connexion 190. Cette sécurité est configurée pour relier le régulateur de tension 120 avec le dispositif de connexion 190 et pour agir de façon indépendante du régulateur de tension 120. Cette disposition possède l'avantage d'isoler le régulateur de tension 120 du dispositif de connexion 190 dans le cas où la variation du courant de sortie du régulateur dans un intervalle de temps donné serait trop importante.

En effet, dans certaines circonstances, le dispositif de chargement 100 doit fournir une tension et/ou un courant très important. Pour se faire, un système de chargement 300 comprenant une borne de chargement 200 selon l'invention peut faciliter un transfert d'énergie plus important, plus exactement un système de chargement 300 peut permettre de suppléer une quantité d'énergie électrique supplémentaire.

Comme il peut être observé sur la figure 2, la borne de chargement 200 comprend un dispositif de chargement 100 selon l'invention, un convertisseur de tension 210 comprenant un nœud d'entrée NE, un nœud de sortie NS, un nœud de référence NR et un nœud commun NC. Le convertisseur de tension 210 est configuré pour être connecté au dispositif de chargement entre le nœud de sortie NS et le nœud commun NC et pour fournir une tension continue et/ou un courant continu au dispositif de chargement 100. En amont du convertisseur de tension 210, un redresseur 220 est connecté entre le nœud d'entrée NE et le nœud de référence NR.

La borne de chargement est comprise dans un système de chargement 300. Ce dernier comprend une source d'énergie électrique 320, un transformateur 310 comprenant un circuit primaire et un circuit secondaire, ledit transformateur est configuré pour être connecté à la source d'énergie électrique 320 par l'intermédiaire de la borne de chargement 200. Le redresseur 220, cité précédemment, est configuré pour relier transformateur 310 au convertisseur de tension 210. Effectivement, le redresseur est configuré pour redresser la tension et/ou le courant entre l'ensemble de nœud secondaire d'entrée NSE et le nœud d'entrée NE et le nœud de référence NR.

Le circuit primaire du transformateur 310 est muni d'un ensemble de nœud d'entrée de circuit primaire NECP et le circuit secondaire du transformateur 310 possède un ensemble de nœud de sortie de circuit secondaire NECS.

En effet, la borne de chargement comprend en outre un ensemble de nœud primaire d'entrée NPE, un ensemble de nœud primaire de sortie NPS et un ensemble de nœud secondaire d'entrée NSE. Le transformateur 310, quant à lui, est configuré pour être connecté à la borne de chargement entre l'ensemble de nœud primaire de sortie NPS et l'ensemble de nœud secondaire d'entrée NSE. Plus exactement, le circuit primaire du transformateur 310 est connecté à l'ensemble de nœud d'entrée de circuit primaire NECP par l'intermédiaire de l'ensemble de nœud primaire d'entrée NPE et le circuit secondaire du transformateur 310 est connecté à l'ensemble de nœud de sortie de circuit secondaire NSCS par l'intermédiaire de l'ensemble de nœud secondaire d'entrée NSE. Cette configuration permet d'intégrer une précharge 280 et un système de sécurité 290 monté en série entre l'ensemble de nœud primaire d'entrée NPE et l'ensemble de nœud primaire de sortie NPS.

Grâce à cette disposition, la borne de chargement 200 peut combiner l'énergie électrique fournie par la source d'énergie et l'énergie électrique stockée dans le dispositif de stockage d'énergie 110 au véhicule électrique 900 au travers du régulateur de tension 120. Plus précisément, le dispositif de chargement 100 peut combiner l'énergie électrique fournie par la source d'énergie 320 et l'énergie électrique stockée dans le dispositif de stockage d'énergie 110 au véhicule électrique 900 au travers du régulateur de tension 120. Ainsi, une alimentation hybride est crée en associant l'énergie électrique du convertisseur de tension 210 avec l'énergie électrique stockée dans le dispositif de stockage d'énergie 110.

Le dispositif de connexion 190 comprend des patins (non représentés) qui sont articulés par des articulations (non représentés) à l'aide d'actionneurs (non représentés). Plus exactement, le dispositif de connexion 190 est configuré pour être articulé entre une position active dans laquelle les patins sont configurés pour connecter le dispositif de connexion 190 avec l'organe de connexion 990 du véhicule électrique 900 et transférer une quantité d'énergie dans l'organe de stockage 910 du véhicule électrique 900 et une position de libération dans laquelle les patins sont déconnectés de l'organe de connexion 990 du véhicule électrique 900. Évidemment, la connexion entre les patins du dispositif de chargement 100 et l'organe de connexion 990 du véhicule électrique 900 se produit lorsque le dispositif de chargement 100 et le véhicule électrique 900 sont à proximité l'un de l'autre et/ou à l'arrêt.

Dès lors que le tramway 900 est à proximité du dispositif de chargement 100, plus exactement lorsque le tramway 900 accède à l'espace de chargement, d'arrêt et/ou de stationnement de la station de chargement 400, les patins se connectent à l'organe de connexion 990 du tramway 900. Cette opération de connexion a une durée comprise entre 0,1 seconde et 5 secondes, en particulier entre 0,3 seconde et 4 secondes et notamment entre 0,5 seconde et 3 secondes.

Lors de cette opération de connexion, le dispositif de chargement 100 et le tramway 900 échange des informations avant de procéder au transfert d'énergie selon le procédé de chargement.

### Présentation des étapes du procédé de chargement

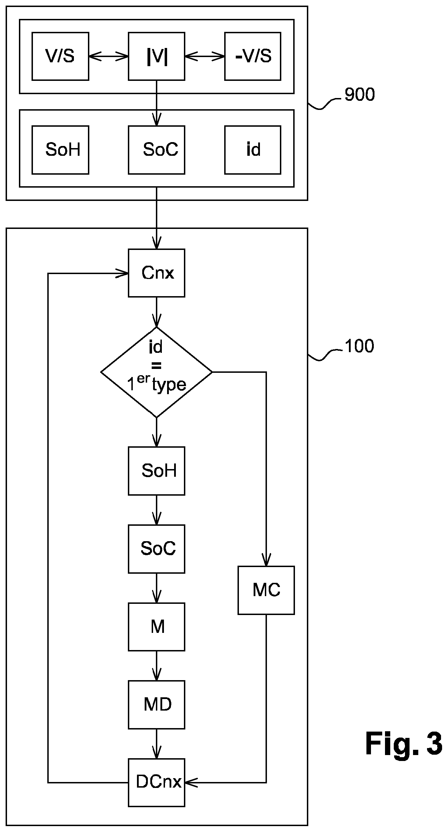

Le fonctionnement du système de chargement est décrit en regard du procédé de chargement de la figure 3, en considérant, dans un premier temps l'approche du véhicule électrique 900, c'est à dire dans ce cas particulier un tramway 900, où ce dernier s'approche à proximité de la station de chargement 400. Le procédé de chargement décrit dans la suite de cette description sera expliqué en prenant comme point de départ de l'explication le moment où le tramway 900 quitte la station de chargement 400 pour en rejoindre une station de chargement 400.

À l'étape de translation, le tramway 900 se déplace entre deux stations de chargement 400 par une phase de translation. Lors de cette étape, le tramway 900 quitte, par exemple, la station de chargement 400 et se déplace sur la ligne de transport vers la prochaine station de chargement 400. Lors de l'étape de translation, le tramway 900 effectue, en alternance, une phase de consommation d'énergie électrique comprenant une opération d'accélération V/s et une opération de maintien de la vitesse |V|, et une phase de génération d'énergie électrique comprenant une opération de décélération -V/s.

Lors de la phase de consommation d'énergie, le convertisseur bidirectionnel 920 puise dans l'énergie électrique stockée dans l'organe de stockage d'énergie 910. Cette énergie est consommée par la suite par le moteur électrique 930 ainsi que le convertisseur bidirectionnel 920, afin de fournir un courant alternatif au moteur électrique 930. Cette consommation d'énergie électrique par le moteur électrique 930 permet un mouvement de translation au tramway 900 dans l'espace de transport 710.

Cette énergie est consommée par la suite par l'ensemble d'organe auxiliaire, le moteur électrique 930 ainsi que le convertisseur bidirectionnel 920, afin de fournir un courant alternatif au moteur électrique 930. Cette consommation d'énergie électrique par le moteur électrique 930 permet un mouvement de translation au tramway 900 dans l'espace de transport 710.

Au cours de la phase de consommation d'énergie, plus particulièrement, lors des opérations d'accélération et de maintien de la vitesse, le convertisseur bidirectionnel 920 fonctionne en mode onduleur et le moteur électrique 930 permet, par l'intermédiaire d'un ensemble de roues, la translation du véhicule électrique 900.

Au cours de la phase de génération d'énergie, plus exactement, lors des opérations de décélération -V/s, le convertisseur bidirectionnel 920 fonctionne en mode redresseur et le moteur électrique 930 fonctionne en tant que génératrice de courant/tension, autrement dit en tant que génératrice d'énergie électrique.

En effet, l'énergie électrique générée par le moteur électrique 930 est fournie au convertisseur bidirectionnel 920 de sorte à charger l'organe de stockage d'énergie 910 lors de sa translation. Étant donné que l'énergie électrique circule entre l'organe de stockage d'énergie 910 et le convertisseur bidirectionnel 920, cette énergie est parfaitement disponible, lors de ce transfert, à l'ensemble des organes auxiliaires.

En parallèle à l'étape de translation, l'organe de contrôle mesure la situation du tramway 900. Une partie des mesures comprend un état général de l'organe de stockage d'énergie 910. À des fins de simplification, il sera considéré qu'un organe de contrôle 950 mesure un état de charge SoC de l'organe de stockage 910 et un état de santé SoH de l'organe de stockage d'énergie 910 :
- l'état de charge SoC comprend un indicateur du niveau de charge de l'organe de stockage d'énergie 910, plus précisément l'état de charge SoC permet de connaître la tension entre la borne d'entrée et la borne de sortie de l'organe de stockage d'énergie 910 ;
- l'état de santé SoH comprend un indicateur de l'état d'usure de l'organe de stockage d'énergie 910, plus précisément l'état de santé SoH permet de connaître la capacité maximale et la résistance interne équivalente de stockage de l'organe de stockage d'énergie 910.

Dans ce procédé de chargement, il est tout à fait possible de prévoir une troisième étape parallèle à l'étape de translation et à l'étape de mesure, qui serait une étape de télécommunication. Ainsi le tramway 900 peut informer une station de chargement 400 sur l'état général de l'organe de stockage d'énergie 910 et/ou être informé de la présence d'une station de chargement 400 à proximité et par la même occasion informer la station de chargement 400 de l'état général de l'organe de stockage d'énergie 910. Cette communication se produit par l'intermédiaire d'un organe de communication 970. L'organe de communication 970 est, en effet, configuré pour permettre une communication sans fil, de type Wi-Fi™ selon le protocole TCP/IP et/ou Bluetooth™ par exemple, avec la borne de chargement 200. Cette dernière, c'est-à-dire la borne de chargement, recevrait ces informations par l'intermédiaire du dispositif de communication 170.

Alternativement à une communication sans fil, l'organe de communication 970 comprendrait un organe de couplage/découplage 980. L'organe de couplage/découplage 980 serait configuré pour coupler et/ou découpler la communication du transfert d'énergie. En effet, le dispositif de connexion et l'organe de connexion sont configurés pour permettre la communication entre le véhicule électrique et le dispositif de chargement par courant porteur - en anglais « Power Line Carrier » ou « Broadband over Power Lines ». Dès lors, un organe de couplage/découplage 980 relié à l'organe de communication 970 permet de coupler et/ou de découpler la communication du transfert d'énergie. Parallèlement, un dispositif de couplage/découplage 180 relié au dispositif de communication 170 permet de coupler et/ou de découpler la communication du transfert d'énergie de sorte à établir une communication entre l'unité d'asservissement 150 et l'unité centrale 950. En effet, une fois la communication couplée et ensuite découplée du transfert d'énergie, l'organe de communication, dans le cas du véhicule électrique, ou le dispositif de communication, dans le cas du dispositif de chargement, transfert la communication respectivement à l'unité central ou l'unité d'asservissement. Bien évidemment, la communication par courant porteur ne peut se produire lorsque et seulement lorsque il y a une connexion électrique entre le tramway et le dispositif de chargement.

L'étape de translation s'achève donc par une étape d'immobilisation lorsque le tramway 900 accède à l'espace de chargement, d'arrêt et/ou de stationnement de la station de chargement 400 par l'accès configuré pour recevoir le tramway 900 dans cette espace et s'immobilise au niveau de la borne de chargement 200. Lorsque le tramway 900 se trouve en vis-à-vis avec la borne de chargement 200, plus exactement lorsque le dispositif de connexion 190 se trouve en regard de l'organe de connexion 990 afin de permettre l'étape de chargement.

En effet, l'étape de chargement débute par une opération de connexion « CNX » du dispositif de connexion 190 de la station de chargement 400 avec l'organe de connexion 990 du tramway 900. Étant donné que le dispositif de connexion 190 de la station de chargement 400 et l'organe de connexion 990 du tramway 900 sont configurés pour coopérer, la connexion en est d'autant plus simplifiée. Toutefois, afin de s'assurer de la bonne connexion électrique entre le dispositif de connexion 190 et l'organe de connexion 990, le dispositif de chargement 100, à l'aide du dispositif de retour 155 plus exactement à l'aide d'un dispositif de mesure (non représenté), un léger courant est envoyé vers l'organe de connexion 990 afin de connaître la résistance série équivalente - en anglais Equivalent Series Résistance : ESR. Cette mesure peut être réalisée par une « mesure 4 pointes » par exemple qui est bien connue de l'homme du métier. Le résultat de cette mesure permet, dans la suite du procédé de chargement, de confirmer le bon contact électrique au niveau de la connexion.

Effectivement, cette mesure permet de révéler l'impédance Z au niveau de l'organe de connexion 990 et ainsi permet par la même occasion de déterminer l'identité du tramway 900. Cela se déroule lors de l'opération « id = 1^{er} type ». L'impédance Z mesurée est comprise entre 1,5 mOhm et 1,5 Ohm, en particulier entre 3 mOhm et 1 Ohm et notamment entre 5 mOhm et 30 mOhm. Dans le cas d'une mesure par courant constant, l'homme du métier parle de résistance et cette dernière est comprise entre 1,5 mOhm et 1,5 Ohm, en particulier entre 3 mOhm et 1 Ohm et notamment entre 5 mOhm et 30 mOhm.

Selon l'impédance Z mesurée, une distinction est faite entre un élément de premier type, c'est-à-dire un véhicule électrique selon l'invention, comprenant une impédance Z comprise entre 1,5 mOhm et 1,5 Ohm, en particulier entre 3 mOhm et 1 Ohm et notamment entre 5 mOhm et 30 mOhm, et un élément de deuxième type, c'est-à-dire un véhicule électrique standard, comprenant une impédance Z supérieure à 30 mOhm et, en particulier supérieure à 1 Ohm et notamment supérieure à 1,5 Ohm. Cette distinction permet de déclencher l'opération de chargement dynamique « MD » dans le cas d'un véhicule électrique selon l'invention ou de déclencher l'opération de chargement constant « MC » dans le cas d'un véhicule standard.

L'opération de chargement dynamique « MD » permet de délivrer une tension et/ou un courant variable en fonction du temps et l'opération de chargement constant permet de délivrer une valeur nominale de tension et/ou une valeur nominale de courant constante au cours du temps.

Cette valeur d'impédance Z permet, à la station de chargement 400 et au tramway 900, d'effectuer un échange d'information comme par exemple un échange d'information par rapport à l'élément d'identification *id* du tramway 900 et/ou à ses éléments caractéristiques d'état. Comme il a été précisé un peu plus en amont dans cette description, les éléments caractéristiques d'état du véhicule électrique 900 comprennent l'état de charge SoC et/ou l'état de santé SoH du véhicule (opération « SoH » et « SoC »).

À la réception de ces différentes informations relatives au tramway 900 et des éléments caractéristiques d'état du véhicule électrique 900, le système de chargement établit, à partir des éléments caractéristiques d'état un modèle de chargement M. Lors de l'opération « M », le modèle de chargement M est déterminé à partir des caractéristiques de l'organe de stockage d'énergie 910, plus exactement à partir de l'état de charge SoC et/ou de l'état de santé SoH de l'organe de stockage d'énergie 910 et permet le transfert d'énergie électrique par une boucle ouverte de régulation.

En effet, l'état de charge SoC et/ou de l'état de santé SoH de l'organe de stockage d'énergie 910 vont permettre d'établir les valeurs en tension V_{ch} et en courant I_{ch} de chargement du modèle de chargement M lors de l'opération de modélisation « M ».

Le terme de boucle ouverte signifie que le transfert d'énergie se fait à partir du modèle de chargement M mais qu'aucune communication entre le système de chargement et le tramway 900 n'est établie de façon permanente afin de connaître l'état de charge SoC de l'organe de stockage d'énergie 910.

Lors du transfert d'énergie électrique, par l'intermédiaire du régulateur de tension 120, entre le dispositif de chargement 100 et le tramway 900, les valeurs de transfert d'énergie en tension Vₛ et en courant Iₛ sont mesurées à la sortie du dispositif de chargement 100 par le dispositif de retour 155. Ces mesures en tension Vₛ et en courant Iₛ sont comparées avec les valeurs en tension V_{calc} et en courant I_{calc} à partir du modèle de chargement M au cours du chargement.

En effet, lors de la connexion de l'organe de connexion 990 du tramway 900 avec le dispositif de connexion 190 du dispositif de chargement 100, l'unité centrale du tramway 900 transmet l'état de santé SoH de l'organe de stockage d'énergie 910 électrique à l'unité d'asservissement 150 du dispositif de chargement 100. À partir de l'état de santé SoH, l'unité d'asservissement 150 calcule les maxima en tension et/ou en courant, plus exactement l'unité d'asservissement 150 calcule les valeurs en tension V_{calc}(t) et/ou en courant I_{calc}(t) à transférer en fonction du temps.

En d'autres termes, à intervalle de temps régulier, autrement dit à une fréquence fixe, une valeur en courant et de tension aux bornes de l'organe de stockage d'énergie 910 est estimée, plus exactement sont estimées à partir des valeurs des mesures en sortie (Vₛ(t) ; Iₛ(t)) et des valeurs calculées (V_{calc}(t) ; I_{calc}(t)).

Afin d'éviter tout écart entre les valeurs mesurées (Vₛ(t) ; Iₛ(t)) et les valeurs calculées (V_{calc}(t) ; I_{calc}(t)) à partir du modèle, une unité de correction corrige les divergences entre les données en prenant les valeurs du modèle de chargement M pour référence afin de fournir des valeurs en tension Vₑₛₜ(t) et en courant Iₑₛₜ(t) estimées.

Lorsque cela est permis, certaines mesures en tension Vₘ(t) et en courant Iₘ(t) sont effectuées aux bornes de l'organe de stockage du véhicule électrique 900 et sont renvoyées vers l'unité d'asservissement 150 par l'intermédiaire de la connexion. En effet, grâce à la liaison permanente entre le véhicule électrique 900 et le dispositif de chargement 100 lors de l'opération de transfert d'énergie, le véhicule électrique 900 peut transmettre ces mesures par courant porteur, en utilisant le protocole TCP/IP et en couplant au transfert d'énergie un signal haute fréquence par l'intermédiaire de l'organe de couplage/découplage 980. L'unité d'asservissement 150 peut recevoir ainsi ces mesures en les découplant du transfert d'énergie par l'intermédiaire du dispositif de couplage/découplage 180.

L'unité d'asservissement 150 compare alors les valeurs en tension Vₑₛₜ(T) et en courant Iₑₛₜ(T) estimées à un instant précis (T) avec les valeurs en tension Vₘ(T) et en courant Iₘ(T) mesurées au même instant (T) afin de fournir des valeurs en tension V_{corr}(T) et en courant Icorr(T) corrigées pour éviter une déviation du modèle de chargement M.

Ces étapes de régulation à boucle ouverte sont répétées à intervalle régulier jusqu'à ce que les valeurs en tension Vₘ(T) et en courant Iₘ(T) aient atteint les valeurs en tension V_{ch}(T) et en courant I_{ch}(T) de chargement.

Une fois les valeurs de chargements atteints, le dispositif de connexion 190 du dispositif de chargement 100 se déconnecte, lors de l'opération « DCNX » de l'organe de connexion 990 du véhicule électrique 900 et un nouveau cycle, plus exactement, une nouvelle étape de chargement du dispositif de chargement 100 commence. Cette étape de chargement du dispositif de stockage d'énergie 110 a une durée comprise entre 30 secondes et secondes, en particulier entre 50 secondes et secondes et de préférence entre 60 secondes et secondes. En parallèle, l'unité d'asservissement, archive les valeurs mesurées, les valeurs estimées et/ou les valeurs corrigées avec l'élément d'identité du véhicule électrique, l'état de charge et/ou l'état de santé.

Il se peut que, dans certains cas, le véhicule électrique 900 se présentant à la station de chargement 400 ne soit pas un véhicule électrique 900 selon l'invention mais soit un tramway 900 de type standard. Dès lors, l'étape de chargement, comme précédemment décrite, débute par une opération de connexion « CNX » du dispositif de connexion 190 de la station de chargement 400 avec un organe de connexion 990 d'un tramway 900.

Or le dispositif de détection ne reconnaît pas l'élément d'identification *id* du tramway 900 selon l'invention lors de l'opération « id =1^{er} type », c'est à dire une impédance Z mesurée comprise entre 1,5 mOhm et 1,5 Ohm. Le dispositif de chargement 100 bascule en mode constant et délivre une valeur nominale de tension et/ou une valeur nominale de courant constante au cours du temps afin de permettre au tramway 900 de pouvoir être chargé en énergie électrique, lors de l'opération « MC », selon un modèle standard.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de chargement (300) comprenant une borne de chargement (200), une source d'énergie électrique (320), un transformateur (310) comprenant un circuit primaire et un circuit secondaire, ledit transformateur est configuré pour être connecté à la source d'énergie électrique (320) par l'intermédiaire de la borne de chargement (200), comprenant un dispositif de chargement (100) pour un véhicule électrique (900), ledit véhicule électrique (900) comprenant au moins un organe consommateur d'énergie électrique (930) et un organe de stockage d'énergie destiné à être chargé en énergie électrique, à stocker de l'énergie électrique et à transférer cette énergie électrique à l'organe consommateur d'énergie électrique (930) afin de permettre au véhicule électrique (900) d'effectuer un déplacement dans un espace de transport (710) dans lequel se trouve la borne de chargement (200), ledit dispositif de chargement (100) étant configuré pour charger l'organe de stockage d'énergie (910) du véhicule électrique (900), lorsque le véhicule électrique (900) est à proximité dudit dispositif de chargement (100), ledit dispositif de chargement (100) comprend :
- un dispositif de stockage d'énergie (110) ; le dispositif de stockage d'énergie (110) étant destiné à être chargé en énergie électrique, à stocker de l'énergie électrique et à transférer cette énergie électrique ;
- un régulateur de tension (120) ; ledit régulateur de tension (120) étant connecté en série avec le dispositif de stockage d'énergie (110) de sorte à former un circuit fermé et étant configuré pour transférer l'énergie électrique stockée par le dispositif de stockage d'énergie (110) ; et,
- un dispositif de connexion (190) ; le dispositif de connexion (190) étant configuré pour connecter électriquement le dispositif de stockage d'énergie (110) du dispositif de chargement (100), par l'intermédiaire du régulateur de tension (120), avec l'organe de stockage d'énergie (910) du véhicule électrique (900) et pour transférer au moins en partie l'énergie électrique stockée par le dispositif de stockage d'énergie (110) du dispositif de chargement (100) vers l'organe de stockage d'énergie (910) du véhicule électrique (900) ;
ladite borne de chargement (200) comprenant en outre un convertisseur de tension (210) comprenant un nœud d'entrée (NE), un nœud de sortie (NS), un nœud de référence (NR) et un nœud commun (NC), ladite borne de chargement (200) comprenant également un redresseur (220) configuré pour relier le transformateur (310) audit convertisseur de tension (210), ledit convertisseur de tension (210) étant configuré pour être connecté en parallèle au régulateur de tension (120) et au dispositif de stockage d'énergie (110), du dispositif de chargement (100), entre le nœud de sortie et le nœud commun.

2. Système de chargement (300) selon la revendication 1, dans lequel le régulateur de tension (120) est configuré pour réguler la tension d'entrée de l'organe de stockage d'énergie (910) du véhicule électrique (900).

3. Système de chargement (300) selon l'une quelconque des revendications précédentes, dans lequel le régulateur de tension (120) est configuré pour fonctionner selon deux modes de chargement :
- un mode dynamique ; le mode dynamique est configuré pour délivrer une tension et/ou un courant variable en fonction du temps ;
- un mode constant; le mode constant est configuré pour délivrer une valeur nominale de tension et/ou une valeur nominale de courant constante au cours du temps.

4. Système de chargement (300) selon l'une quelconque des revendications précédentes, dans lequel le dispositif de chargement (100) comprend en outre une unité d'asservissement (150) configurée pour asservir le régulateur de tension (120).

5. Système de chargement (300) selon la revendication 4, dans lequel l'unité d'asservissement (150) est configurée pour permettre le transfert d'énergie électrique, par l'intermédiaire du régulateur de tension (120), entre le dispositif de chargement (100) et le véhicule électrique (900) selon un modèle de chargement établi.

6. Système de chargement (300) selon l'une quelconque des revendications précédentes, dans lequel le dispositif de connexion (190) est configuré pour connecter l'organe de connexion du véhicule électrique (990), détecter l'élément d'identification et transférer une quantité d'énergie dans les organes de stockage du véhicule électrique (910).

7. Station de chargement (400) pour un véhicule électrique (900), ladite station de chargement (400) comprend un système de chargement (300) selon l'une quelconque des revendications précédentes, un espace de chargement, d'arrêt et/ou de stationnement comprenant un accès configuré pour recevoir un véhicule électrique (900) dans ledit espace de chargement, d'arrêt et/ou de stationnement.

8. Installation (700) comprenant une pluralité de stations de chargement (400) selon la revendication 7, les stations de chargement étant réparties dans un espace de transport (710) de manière à permettre le déplacement d'un véhicule électrique (900) dans l'espace de transport (710).

## Patentansprüche

1. Ladesystem (300), umfassend eine Ladesäule (200), eine elektrische Energiequelle (320), einen Transformator (310), der einen Primärkreislauf und einen Sekundärkreislauf umfasst, wobei der Transformator konfiguriert ist, um anhand der Ladesäule (200) an die elektrische Energiequelle (320) angeschlossen zu werden, eine Ladevorrichtung (100) für ein Elektrofahrzeug (900) umfassend, wobei das Elektrofahrzeug (900) mindestens ein Verbraucherorgan für elektrische Energie (930) und ein Energiespeicherorgan umfasst, das dazu bestimmt ist, mit elektrischer Energie geladen zu werden, elektrische Energie zu speichern, und diese elektrische Energie an das Verbraucherorgan für elektrische Energie (930) zu übertragen, um es dem Elektrofahrzeug (900) zu erlauben, eine Fahrt in einem Transportraum (710) auszuführen, in dem sich die Ladesäule (200) befindet, wobei die Ladevorrichtung (100) konfiguriert ist, um das Energiespeicherorgan (910) des Elektrofahrzeugs (900) zu laden, wenn sich das Elektrofahrzeug (900) in der Nähe der Ladevorrichtung (100) befindet, wobei die Ladevorrichtung (100) Folgendes umfasst:
- eine Energiespeichervorrichtung (110); wobei die Energiespeichervorrichtung (110) dazu bestimmt ist, mit elektrischer Energie geladen zu werden, elektrische Energie zu speichern und diese elektrische Energie zu übertragen;
- einen Spannungsregler (120); wobei der Spannungsregler (120) in Reihe an die Energiespeichervorrichtung (110) angeschlossen ist, um einen geschlossenen Kreislauf zu bilden, und konfiguriert ist, um die durch die Energiespeichervorrichtung (110) gespeicherte elektrische Energie zu übertragen; und,
- eine Anschlussvorrichtung (190); wobei die Anschlussvorrichtung (190) konfiguriert ist, um die Energiespeichervorrichtung (110) der Ladevorrichtung (100) über den Spannungsregler (120) elektrisch an das Energiespeicherorgan (910) des Elektrofahrzeugs (900) anzuschließen, und um mindestens teilweise die durch die Energiespeichervorrichtung (110) der Ladevorrichtung (100) gespeicherte elektrische Energie zu dem Energiespeicherorgan (910) des Elektrofahrzeugs (900) zu übertragen;
wobei die Ladesäule (200) weiter einen Spannungswandler (210) umfasst, der einen Eingangsknoten (NE), einen Ausgangsknoten (NS), einen Referenzknoten (NR) und einen gemeinsamen Knoten (NC) umfasst, wobei die Ladesäule (200) auch einen Gleichrichter (220) umfasst, der konfiguriert ist, um den Transformator (310) mit dem Spannungswandler (210) zu verbinden, wobei der Spannungswandler (210) konfiguriert ist, um parallel an den Spannungsregler (120) und an die Energiespeichervorrichtung (110) der Ladevorrichtung (100) zwischen dem Ausgangsknoten und dem gemeinsamen Knoten angeschlossen zu werden.

2. Ladesystem (300) nach Anspruch 1, wobei der Spannungsregler (120) konfiguriert ist, um die Eingangsspannung des Energiespeicherorgans (910) des Elektrofahrzeugs (900) zu regeln.

3. Ladesystem (300) nach einem der vorstehenden Ansprüche, wobei der Spannungsregler (120) konfiguriert ist, um gemäß zweier Ladungsmodi zu funktionieren:
- einem dynamischen Modus; der dynamische Modus ist konfiguriert, um eine(n) in Abhängigkeit von der Zeit variable Spannung und/oder variablen Strom zu liefern;
- einem konstanten Modus; der konstante Modus ist konfiguriert, um im Laufe der Zeit einen konstanten Spannungsnennwert und/oder Stromnennwert zu liefern.

4. Ladesystem (300) nach einem der vorstehenden Ansprüche, wobei die Ladevorrichtung (100) weiter eine Ansteuerungseinheit (150) umfasst, die konfiguriert ist, um den Spannungsregler (120) anzusteuern.

5. Ladesystem (300) nach Anspruch 4, wobei die Ansteuerungseinheit (150) konfiguriert ist, um die Übertragung von elektrischer Energie über den Spannungsregler (120) zwischen der Ladevorrichtung (100) und dem Elektrofahrzeug (900) gemäß einem festgelegten Lademodell zu erlauben.

6. Ladesystem (300) nach einem der vorstehenden Ansprüche, wobei die Anschlussvorrichtung (190) konfiguriert ist, um das Anschlussorgan des Elektrofahrzeugs (990) anzuschließen, das Identifikationselement zu erkennen, und eine Energiemenge in die Speicherorgane des Elektrofahrzeugs (910) zu übertragen.

7. Ladestation (400) für ein Elektrofahrzeug (900), wobei die Ladestation (400) ein Ladesystem (300) nach einem der vorstehenden Ansprüche, einen Lade-, Halte- und/oder Abstellraum umfasst, der einen Zugang umfasst, der konfiguriert ist, um ein Elektrofahrzeug (900) in dem Lade-, Halte- und/oder Abstellraum zu empfangen.

8. Installation (700), umfassend eine Vielzahl von Ladestationen (400) nach Anspruch 7, wobei die Ladestationen derart in einem Transportraum (710) verteilt sind, um das Fahren eines Elektrofahrzeugs (900) in dem Transportraum (710) zu erlauben.

## Claims

1. A charging system (300) comprising a charging terminal (200), a source of electrical energy (320), a transformer (310) comprising a primary circuit and a secondary circuit, said transformer is configured to be connected to the source of electrical energy (320) via the charging terminal (200), comprising a charging device (100) for an electric vehicle (900), said electric vehicle (900) comprising at least one electrical energy consuming member (930) and an energy storage member intended to be charged with electrical energy, to store electrical energy and to transfer this electrical energy to the electrical energy consuming member (930) in order to enable the electric vehicle (900) to perform a displacement in a transportation space (710) in which the charging station (200) is located, said charging device (100) being configured to charge the energy storage member (910) of the electric vehicle (900), when the electric vehicle (900) is proximate to said charging device (100), said charging device (100) comprises:
- an energy storage device (110); the energy storage device (110) being intended to be charged with electrical energy, to store electrical energy and to transfer this electrical energy;
- a voltage regulator (120); said voltage regulator (120) being connected in series with the energy storage device (110) so as to form a closed circuit and being configured to transfer the electrical energy stored by the energy storage device (110); and,
- a connection device (190); the connection device (190) being configured to electrically connect the energy storage device (110) of the charging device (100), via the voltage regulator (120), with the energy storage member (910) of the electric vehicle (900) and to transfer at least partially the electrical energy stored by the energy storage device (110) from the charging device (100) to the energy storage member (910) of the electric vehicle (900);
said charging terminal (200) further comprising a voltage converter (210) comprising an input node (NE), an output node (NS), a reference node (NR) and a common node (NC), said charging terminal (200) also comprising a rectifier (220) configured to connect the transformer (310) to said voltage converter (210), said voltage converter (210) being configured to be connected in parallel to the voltage regulator (120) and to the energy storage device (110), of the charging device (100), between the output node and the common node.

2. The charging system (300) according to claim 1, wherein the voltage regulator (120) is configured to regulate the input voltage of the energy storage member (910) of the electric vehicle (900).

3. The charging system (300) according to any one of the preceding claims, wherein the voltage regulator (120) is configured to operate according to two charging modes:
- a dynamic mode; the dynamic mode is configured to output a voltage and/or a current variable over time;
- a constant mode; the constant mode is configured to output a voltage nominal value and/or a constant current nominal value over time.

4. The charging system (300) according to any one of the preceding claims, wherein the charging device (100) further comprises a servo-control unit (150) configured to control the voltage regulator (120).

5. The charging system (300) according to claim 4, wherein the servo-control unit (150) is configured to enable the transfer of electrical energy, through the voltage regulator (120), between the charging device (100) and the electric vehicle (900) according to an established charging model.

6. The charging system (300) according to any one of the preceding claims, wherein the connection device (190) is configured to connect the connection member of the electric vehicle (990), detect the identification element and transfer an amount of energy to the storage members of the electric vehicle (910).

7. A charging station (400) for an electric vehicle (900), said charging station (400) comprises a charging system (300) according to any one of the preceding claims, a charging, stopping and/or parking space comprising an access configured to receive an electric vehicle (900) in said charging, stopping and/or parking space.

8. A plant (700) comprising a plurality of charging stations (400) according to claim 7, the charging stations being distributed in a conveying space (710) so as to enable the displacement of an electric vehicle (900) in the conveying space (710).
